Europäisches Patentamt

European Patent Office

Office européen des brevets

(19)

(11) Veröffentlichungsnummer : **0 054 778**
**B1**

(12)
# EUROPÄISCHE PATENTSCHRIFT

(45) Veröffentlichungstag der Patentschrift :
11.12.85

(21) Anmeldenummer : 81110095.7

(22) Anmeldetag : 03.12.81

(51) Int. Cl.⁴ : **B 01 J 41/16, C 02 F 1/42**

(54) Verfahren zur Herstellung eines Anionenaustauschers und dessen Verwendung.

(30) Priorität : 20.12.80 DE 3048357

(43) Veröffentlichungstag der Anmeldung :
30.06.82 Patentblatt 82/26

(45) Bekanntmachung des Hinweises auf die Patenterteilung : 11.12.85 Patentblatt 85/50

(84) Benannte Vertragsstaaten :
AT BE CH DE FR GB IT LI NL SE

(56) Entgegenhaltungen :
FR-A- 2 090 964
US-A- 3 393 968
US-A- 3 714 010
US-A- 3 885 069
CHEMICAL ABSTRACTS, Band 85, Nr. 8, 23. August
1976, Seite 34 Zusammenfassung 47532v COLUM-
BUS, Ohio (US)

(73) Patentinhaber : Jörgensen, S.E., Prof.
Langkaer vaenge 9
DK-3500 Vaerlöse (DK)

(72) Erfinder : Jörgensen, S.E., Prof.
Langkaer vaenge 9
DK-3500 Vaerlöse (DK)

(74) Vertreter : Weber, Dieter, Dr. et al
Dr. Dieter Weber und Klaus Seiffert Patentanwälte
Gustav-Freytag-Strasse 25 Postfach 6145
D-6200 Wiesbaden 1 (DE)

# 0 054 778

## Beschreibung

Die Erfindung betrifft ein Verfahren zur Herstellung eines Anionenaustauschers, der insbesondere zur Reinigung von Abwasser geeignet ist.

Die Reinigung von Haushalts- und Industrieabwässern stellt ein zunehmend wachsendes Problem dar, da die Forderungen hinsichtlich der Reinheit von an Vorfluter abgegebenen Abwässern ständig gesteigert werden. Praktische Bedeutung in der Abwasserklärung haben nur solche Verfahren, die eine gute Effektivität besitzen und mit relativ geringen Kosten durchgeführt werden können. Mittel zur Abwasserklärung müssen daher zu möglichst geringen Gestehungspreisen herstellbar sein.

Je nach der Provenienz der Abwässer enthalten diese zumeist hauptsächlich hochmolekulare Proteine, niedermolekulare Polypeptide und Aminosäuren, Lipoide und Zucker. Zur Entfernung stickstoffhaltiger Stoffe aus Abwässern wurden bisher speziell Koagulationsverfahren angewendet, bei denen dem Abwasser Stoffe zugesetzt werden, die in der Lage sind, mit den Verunreinigungen Ausflockungen zu bilden, die sich bei der Nachklärung absetzen und so von dem Wasser abgetrennt werden können. Beispiele solcher Ausflockungsmittel sind Ligninsulfonsäure und Dodecylbenzolsulfonsäure. Diese sind in der Lage, hochmolekulare Protein, nicht jedoch niedermolekulare stickstoffhaltige Verbindungen, wie Polypeptide und Aminosäuren, auszuflocken. Insbesondere gewerbliche Abwässer, wie von Fischfabriken und Schlachthöfen, lassen sich daher mit solchen Ausflockungsmitteln nicht ausreichend klären, um an Vorfluter abgegeben werden zu dürfen.

Es ist auch bereits bekannt, Abwasser mit Hilfe von Ionenaustauschern zu reinigen, doch haben sich diese Verfahren bisher nicht als wirtschaftlich tragbar erwiesen. Bekannte Ionenaustauscher auf Cellulosebasis bestanden aus durch Umsetzung von Cellulose mit $SO_3$ gewonnenen Cellulosesulfatestern sowie aus Cellulosephosphatestern. Die Herstellung solcher Ionenaustauscher ist aber zu aufwendig, um die Erzeugnisse für die Abwasserreinigung einsetzen zu können.

Aus der FR-A-2 090 964 ist es bekannt, Ionenaustauscher durch Umsetzung von Cellulose oder Cellulosederivaten, also definierten Verbindungen, mit Polyäthylenimin zu bekommen.

Die US-A-3 714 010 beschreibt die Herstellung von Anionenaustauschermembranen durch Imprägnieren einer Cellulosemembran mit Polyäthylenimin und anschließende Vernetzung mit Aldehyden oder Dimethylolverbindungen. Die Verwendung roher, ungereinigter Naturprodukte als Cellulosederivat lehrt keine der beiden Patentschriften.

Die der Erfindung zugrundeliegende Aufgabe bestand nun darin, ein Verfahren zur Herstellung von Ionenaustauschern zu bekommen, die gute Effektivität bei der Abwasserreinigung besitzen und möglichst billig herstellbar sind. Insbesondere sollen diese Ionenaustauscher anionische organische Verbindungen sowie Proteine und andere Stickstoffverbindungen aus dem Abwasser entfernen. Auch sollen die Ionenaustauscher regenerierbar sein, um das Beseitigungsproblem bezüglich der verbrauchten Ionenaustauscher auf ein Minimum herabzusetzen. Diese Aufgabe wird mit dem erfindungsgemäßen Verfahren gelöst.

Das erfindungsgemäße Verfahren zur Herstellung eines Anionenaustauschers, insbesondere für die Abwasserbehandlung, durch Behandlung von Cellulosederivaten in einem wäßrigen Reaktionsmedium mit Polyäthylenimin und Gewinnung des Ionenaustauschers aus dem Reaktionsgemisch ist dadurch gekennzeichnet, daß man als Cellulosederivat zunächst mit Alkalilauge und anschließend mit Schwefelsäure behandelte Baumrinde verwendet und die Behandlung bei einem pH-Wert von 2 bis 6 durchführt.

Überraschenderweise hat das erfindungsgemäß verwendete Ausgangsmateriel eine erhebliche größere Zahl reaktiver Gruppen, die mit dem Polyäthylenimin zu reagieren in der Lage sind, so daß ein daraus gewonnener Anionenaustauscher eine wesentlich höhere Ionenaustauschkapazität als ein aus reiner Cellulose oder aus einem definierten Cellulosederivat hergestellter Ionenaustauscher besitzt.

Die Gewinnung des Ionenaustauschers aus dem Reaktionsgemisch kann durch Dekantieren, Filtrieren oder andere Abtrennmethoden erfolgen, und der Ionenaustauscher kann nach seiner Abtrennung vom Reaktionsmedium gewaschen und/oder getrocknet werden. Zweckmäßig ist es aber, den Ionenaustauscher ohne vorheriges Waschen und Trocknen in den Handel zu bringen und erst unmittelbar vor seiner Verwendung mit Wasser zu waschen.

Die Umsetzung der vorbehandelten Baumrinde mit dem Polyäthylenimin kann bei Umgebungstemperatur erfolgen, doch ist es zur Abkürzung der Reaktionsdauer und zur Erhöhung des Umsetzungsgrades zweckmäßig, bei erhöhten Temperaturen, günstigerweise im Bereich von 40 bis 90, vorzugsweise im Bereich von 60 bis 70 °C zu arbeiten.

Der pH-Wert des Reaktionsgemisches wird zweckmäßig im Bereich von 4 bis 5 eingestellt, was mit Hilfe einer Säure, vorzugsweise mit Salzsäure geschehen kann. Die Umsetzungsdauer hängt von den übrigen Reaktionsbedingungen ab, insbesondere auch davon, ob die Umsetzung unter ruhigem Stehen oder unter Rühren erfolgt. Die Reaktionszeit ist relativ lange und liegt gewöhnlich zwischen zwei Stunden und vier Tagen.

Die Reaktionsgeschwindigkeit hängt auch von der Konzentration der Polyäthyleniminlösung ab. Diese Konzentration sollte daher bei mindestens 1 Gewichts-%, besser noch bei mindestens 2 Gewichts-%, liegen, wobei Lösungen von beispielsweise 5 bis 40 Gewichts-% äußerst geeignet sind.

Die Polyäthyleniminlösung kann nacheinander für mehrere Chargen verwendet werden, da sie nach

2

der Entfernung von der ersten und auch von weiteren Chargen noch ausreichend Polyäthylenimin enthält, um für weitere Umsetzungen verwendet werden zu können.

Zweckmäßig liegen die Umsetzungszeiten bei ein bis vier Tagen, um eine sehr gute Aktivierung des Materials zu bekommen und genügend Polyäthylen an die vorbehandelte Baumrinde zu binden.

Die in der erfindungsgemäß vorbehandelten Baumrinde enthaltenen Verbindungen sind nicht definiert, doch ist klar, daß sie schwefelhaltige stark saure Gruppen, wie saure Sulfatestergruppen oder Sulfonsäuregruppen, sowie auch Carboxylgruppen und Hydroxylgruppen enthalten.

Dieses Ausgangsmaterial wird zweckmäßig so hergestellt, daß man zerkleinerte Baumrinde, bevorzugt mit einer mittleren Teilchengröße von 0,5 bis 5, zweckmäßig von 1 bis 3 mm, zunächst mit wenigstens 5-gewichtsprozentiger Alkalilauge, vorzugsweise mit 20- bis 40-gewichtsprozentiger Alkalilauge, besonders Natronlauge, behandelt, sodann mit Wasser wäscht, zweckmäßig bis zu einem pH-Wert unter 9, anschließend mit 30- bis 40-gewichtsprozentiger, vorzugsweise mit 40- bis 70-, besonders mit 50- bis 65-gewichtsprozentiger Schwefelsäure behandelt und schließlich erneut mit Wasser, vorzugsweise bis zu einem pH-Wert über 4, wäscht. Die Behandlungszeiten liegen dabei mit der Alkalilauge bei 0,5 bis 20, vorzugsweise bei 3 bis 10 h, bei der Behandlung mit Schwefelsäure bei 0,5 bis 8, vorzugsweise bei 1 bis 6 h.

Insbesondere für die Verwendung in der Abwasserreinigung ist es zweckmäßig, den durch Umsetzung mit Polyäthylenimin erhaltenen Anionenaustauscher mit aktivierter Tonerde zu vermischen, wobei das Mischungsverhältnis von Ionenaustauscher zu aktivierter Tonerde zweckmäßig zwischen 2 : 1 bis 1 : 4 liegt, wie beispielsweise bei 1 : 2. Dieser letztere Wert gilt insbesondere bei der Verwendung des Gemisches zur Reinigung von kommunalem Abwasser.

Die Tonerde kann zweckmäßig durch Behandlung mit Salpetersäure aktiviert werden, obwohl auch anders aktivierte Tonerde in Betracht kommt.

Der erfindungsgemäße Ionenaustauscher hat überraschenderweise hohe Effektivität bei der Abwasserreinigung, insbesondere hohe Selektivität gegenüber Proteinen, Farbstoffen, Huminsäure, anorganischen Anionen, wie Chromationen oder Phosphationen, und anderen Verunreinigungen, die sich in häuslichen oder gewerblichen und industriellen Abwässern finden. So kann man diesen Ionenaustauscher beispielsweise zur Reinigung von kommunalen Abwässern sowie von Abwässern aus Textilfärbebetrieben, Galvanisierbetrieben, Schlachthöfen und Fischfabriken, aus Kochern und Wäschereien sowie Sojabohnenfabriken und dergleichen verwenden.

Der erfindungsgemäß hergestellte Anionenaustauscher ist auch leicht regenerierbar, wie durch Eluieren mit Natronlauge oder einer wäßrigen Lösung, die ein Gemisch von Natronlauge und Kochsalz enthält. Zweckmäßig verwendet man zum Regenerieren eine Lösung von 0,5 bis 1,5 M NaOH plus 0,5 bis 2 M NaCl.

Beispiel

Das als Ausgangsmaterial verwendete Cellulosederivatgemisch wurde wie folgt hergestellt : Kiefernborke wurde mit Hilfe einer Schneidmaschine auf eine Teilchengröße von 0,5 bis 3 mm zerkleinert. Die zerkleinerte Borke wurde in einem Reaktionsbehälter mit 2 M Natronlauge begossen, bis die gesamte Borke bedeckt war. Das Reaktionsgemisch ließ man sieben Stunden stehen. Sodann wurde die Natronlauge abgelassen und die behandelte Borke mit Wasser bis zu einem pH-Wert von 9 gewaschen. Sodann wurde sie mit 65prozentiger Schwefelsäure bedeckt und vier Stunden stehen gelassen. Nunmehr wurde die Schwefelsäure abgelassen und das feste Reaktionsprodukt mehrmals mit Leitungswasser gewaschen bis der pH-Wert über 4 lag.

Eine etwa 7prozentige Polyäthyleniminlösung in Wasser wurde mit Salzsäure auf pH 4,5 eingestellt. Das wie oben hergestellte Ausgangsmaterial wurde mit dieser Lösung bedeckt, das Reaktionsgemisch wurde 5 Stunden auf 70 °C erhitzt und dann 3 Tage bei Raumtemperatur stehen gelassen. Sodann wurde das Verfahrensprodukt abfiltriert, das Filtrat konnte für eine weitere Charge verwendet werden.

Unmittelbar vor der Verwendung wurde der so erhaltene feuchte Ionenaustauscher mehrmals mit Wasser gewaschen.

Zur Bestimmung des Selektivitätskoeffizienten wurden Lösungen von Azofarbstoffen, Dodezylbenzolsulfonat (DBS), Huminsäure und Kaliumchromat hergestellt und über eine Säule des Anionenaustauschers geschickt. Eine mit dem Anionenaustauscher gefüllte Glassäule mit einem Durchmesser von 2,5 cm wurde verwendet. Die Schichtdicke lag bei 30 cm, die Fließgeschwindigkeit bei 15 m je Stunde. Der Auslauf wurde alle 500 ml analysiert.

Der ermittelte Selektivitätskoeffizient bedeutet die prozentuale Menge einer Substanz, die gegenüber Natriumchlorid bevorzugt aufgenommen wird, wenn der Ionenaustauscher mit einer Lösung behandelt wird, die an Gelöststoffen 50 % der betreffenden Substanz und 50 % Natriumchlorid enthält.

Für die verschiedenen Substanzen wurden folgende Selektivitätskoeffizienten ermittelt :

(Siehe Tabelle Seite 4 f.)

0 054 778

| 25 mg/1 der Behandlungslösung | pH der Behandlungslösung | Selektivitätskoeffizient |
|---|---|---|
| roter Azofarbstoff | 6,8 bis 7,2 | 67 |
| gelber Azofarbstoff | 6,8 bis 7,2 | 35 |
| DBS | 6,8 bis 7,2 | 50 |
| Huminsäure | 6,0 bis 6,5 | 100 |
| $CrO_4^{--}$ | 6,5 bis 6,8 | 19 |

Der wie oben hergestellte Anionenaustauscher wurde mit aktivierter Tonerde in solchem Mengenverhältnis vermischt, daß zwei Drittel aus aktivierter Tonerde und ein Drittel aus Ionenaustauscher bestanden. Dieses Gemisch wurde zur Prüfung der Entfernung von Phosphor aus einer wäßrigen Lösung benutzt. Das Gemisch wurde in einer Pilotanlage mit einem Durchmesser von 15 cm und einer Höhe von 2 m in einer Schichtdicke von 1 m eingefüllt. Die aktivierte Tonerde ist in der Lage, Orthophosphat aufzunehmen, während der Ionenaustauscher Polyphosphate und organische Phosphate wirksam entfernt. Es wurde eine Fließgeschwindigkeit von 10 Schichtvolumina je Stunde entsprechend etwa 175 Litern Abwasser je Stunde angewendet. Der Abwasserstrom ging aufwärts durch die Säule.

Wenn die Säule gesättigt war, wurde sie nach dem folgenden Verfahren regeneriert : Rückwaschen 35 l Wasser, Elution 25 l 0,5 M NaOH, Waschen 70 l Wasser.

Folgende Abwässer wurden in der Pilotanlage behandelt :

I. Abwasser aus einem biologischen Filter, Gesamtphosphorgehalt, 9,6 mg je Liter

II. Abwasser aus einer chemischen Ausfällung, Gesamtphosphorgehalt 0,61 mg je Liter

III. Überlauf aus einem Regenwasserbecken, Gesamtphosphorgehalt 1,08 mg je Liter.

Die Säule und die Elutionsflüssigkeit wurden vier Mal benutzt, bevor die hier beschriebenen Experimente durchgeführt wurden. Auslaufproben aus der Säule wurden abgenommen und alle zwei Stunden analysiert. Die Ergebnisse finden sich in den folgenden Tabellen I und II.

Tabelle I

| Einlauf | Kapazität | | Schlamm | |
|---|---|---|---|---|
| | Bettvolumen | $m^3$ + | 1 | $1/m^3$ Abwasser |
| I........ | 320 | 5,5 | 5 | 0,90 |
| II....... | 2200 | 38,4 | 5 | 0,13 |
| III...... | 1811 | 31,6 | 5 | 0,16 |

+0,1 m³ wird abgezogen entsprechend 0,1 m³ Waschwasser

Tabelle II

| Probe (Mittelwert) | P gesamt | P löslich | ortho-P | lösliches organisches P | lösliche Polyphosphate |
|---|---|---|---|---|---|
| Einlauf I... | 9,6 | 7,3 | 6,1 | 0,7 | 0,5 |
| Auslauf I... | 0,95 | 0,95 | 0,57 | 0,2 | 0,2 |
| Einlauf II.. | 0,61 | 0,37 | 0,25 | 0,05 | 0,05 |
| Auslauf II.. | 0,06 | 0,06 | 0,01 | 0,03 | 0,02 |
| Einlauf III. | 1,08 | 0,51 | 0,38 | 0,11 | 0,04 |
| Auslauf III. | 0,10 | 0,10 | 0,03 | 0,03 | 0,04 |

Die Tabellen I und II zeigen, daß die Kapazität einer etwa 90prozentigen Phosphatentfernung entspricht.

4

**Patentansprüche**

1. Verfahren zur Herstellung eines Anionenaustauschers, insbesondere für Abwasserbehandlung, durch Behandlung von Cellulosederivaten in einem wäßrigen Reaktionsmedium mit Polyäthylenimin und Gewinnung des Ionenaustauschers aus dem Reaktionsgemisch, dadurch gekennzeichnet, daß man als Cellulosederivat zunächst mit Alkalilauge und anschließend mit Schwefelsäure behandelte Baumrinde verwendet und die Behandlung bei einem pH-Wert von 2 bis 6 durchführt.

2. Verfahren nach Anspruch 1, dadurch gekennzeichnet, daß man die Umsetzung bei einer Temperatur von 40 bis 90, vorzugsweise von 60 bis 70 °C durchführt.

3. Verfahren nach Anspruch 1 und 2, dadurch gekennzeichnet, daß man bei einem pH-Wert von 4 bis 5 arbeitet, der vorzugsweise mit Salzsäure eingestellt wird.

4. Verfahren nach Anspruch 1 bis 3, dadurch gekennzeichnet, daß man die Umsetzung während einer Zeit von 2 Stunden bis 4 Tagen durchführt.

5. Verfahren nach Anspruch 1 bis 4, dadurch gekennzeichnet, daß man mit einer Polyäthyleniminlösung einer Konzentration von mindestens 1 % behandelt.

6. Verwendung eines nach Anspruch 1 bis 5 hergestellten Ionenaustauschers zur Abwasserreinigung.

7. Verwendung eines Ionenaustauschers nach Anspruch 6 im Gemisch mit aktivierter Tonerde, vorzugsweise in einem Gewichtsverhältnis von Ionenaustauscher zu Tonerde von 2 : 1 bis 1 : 4.

**Claims**

1. Process for preparing an anion exchanger, especially for the waste water treatment, comprising the treatment of cellulose derivatives with polyethylene imine in an aqueous reaction medium and recovery of the ion exchanger from the reaction mixture, characterized in that as cellulose derivative bark treated first with caustic alkali and subsequently with sulfuric acid is used and the treatment is carried out at a pH value of from 2 to 6.

2. Process according to claim 1, characterized in that the reaction is carried out at a temperature of from 40 to 90, preferably of from 60 to 70 °C.

3. Process according to claim 1 and 2, characterized in that there is treated at a pH value of from 4 to 5 which is adjusted preferably by means of hydrochloric acid.

4. Process according to claims 1 to 3, characterized in that the reaction is carried out during a time of from 2 hours to 4 days.

5. Process according to claims 1 to 4 characterized in that there is treated with a polyethylene imine solution having a concentration of at least 1 %.

6. Use of an ion exchanger prepared according to claims 1 to 5 for the waste water purification.

7. Use of an ion exchanger according to claim 6 in admixture with activated alumina, preferably in a weight ratio of ion exchanger to alumina of 2 : 1 to 1 : 4.

**Revendications**

1. Procédé pour la préparation d'un échangeur d'anions, notamment pour le traitement de l'eau usée, par traitement de dérivés de cellulose dans un milieu réactionnel aqueux par la polyéthylène imine et obtention d'un échangeur d'ions à partir du milieu réactionnel, caractérisé en ce que l'on utilise comme dérivé de la cellulose une écorce d'arbre traitée d'abord par une lessive alcaline et ensuite par de l'acide sulfurique et qu'on réalise le traitement à une valeur de pH de 2 à 6.

2. Procédé selon la revendication 1, caractérisé en ce que l'on réalise la réaction à une température de 40 à 90, de préférence de 60 à 70 °C.

3. Procédé selon la revendication 1 ou 2, caractérisé en ce que l'on travaille à une valeur de pH de 4 à 5 réglée de préférence à l'aide d'acide chlorhydrique.

4. Procédé selon l'une des revendications 1 à 3, caractérisé en ce que l'on réalise la transformation pendant une durée de 2 heures à 4 jours.

5. Procédé selon l'une des revendications 1 à 4, caractérisé en ce que l'on traite par une solution de polyéthylène imine de concentration d'au moins 1 %.

6. Utilisation d'un échangeur d'ions préparé selon l'une des revendications 1 à 5 pour la purification des eaux usées.

7. Utilisation d'un échangeur d'ions selon la revendication 6 en mélange avec de l'alumine activée, de préférence en un rapport en poids de l'échangeur d'ions sur l'alumine de 2 : 1 à 1 : 4.